# EUROPEAN PATENT APPLICATION

(11) **EP 4 579 633 A1**
(43) Date of publication of application: **02.07.2025**
(21) Application number: 24460002.9
(22) Date of filing: 03.01.2024
(51) Int. Cl.: G09B 9/04, G09B 9/12, A63G 31/16

(54) **DESIGN OF A SIMULATOR FOR MOTORSPORT TRAINING**

(30) Priority: 27.12.2023 PL 44731023
(71) Applicant: Sim Center SP. Z o.o., 61-757 Poznan (PL)
(72) Inventor: Kowalski, Wojciech, 62-064 Plewiska (PL)
(74) Representative: Urbanska-Luczak, Barbara

(57) **Abstract**

The subject of the invention is a design of a simulator for motorsport training, having a form of a moving platform with 6 degrees of freedom with an adjustable point of the steering axle, which also includes a lower platform with specific dimensions and parameters.

The design of the simulator according to the invention is characterized in that an upper platform (2) of the simulator is attached in a sliding manner to a lower platform (1), with the upper platform (2) consisting of a frame (6), to which a driven truck (11) system (9) and a trailing truck (18) system (10) are attached in series to the frame (6) in the lengthwise axis of the upper platform (2), where the system (9) of the driven truck (11) of the upper platform (2) consists of a driven truck (11) attached to the frame (6) with fastenings (13) in such a way that the fastenings (13) are connected to each other with guides (12) and the driven truck (11) is attached to the guides (12) using linear bearings (14), and to one of the fastenings (13) a drive (15) is attached, which advantageously constitutes a servomotor, and the driven truck (11) is connected to the drive (15) using a ball screw (16) and a claw coupling (17), whereas the trailing truck (18) system (10) of the upper platform (2) consists of a trailing truck (18) attached with linear bearings (21) to guides (19) which connect the end fastenings (20), using which the system (10) of the trailing truck is attached to the frame (6), and the lower platform (1) constitutes a frame (24) to which two systems of driven trucks (26, 27) are attached in parallel to each other on axes perpendicular to the longitudinal axis of the lower platform (2), with the first driven truck (26) of the lower platform (1) being attached to the drive (36), advantageously a servomotor, through a ball screw (34) and a claw coupling (35), where the drive (36) is bolted to one of the fastenings (28), and the fastenings (28) are connected to each other with at least two guides (30), to which the first driven truck (26) is attached using linear bearings (31), and the second driven truck (27) of the lower platform (1) is attached in a sliding manner with linear bearings (33) to the guides (32) which connect fastenings (29), where to one of the fastenings (29) a drive (39) is bolted, advantageously a servomotor, connected to the second driven truck (27) using a ball screw (37) and a claw coupling (38) of the second driven truck (27) of the lower platform (1), with the driven truck (11) of the upper platform (2) being connected in a vertical axis with the first driven truck (26) of the lower platform (1) using the coupler (22) and the trailing truck (18) of the upper platform (2) is connected using the coupler (23) to the second driven truck (27) of the lower platform (1).

## Description

The subject of the invention is a design of a simulator for motorsport training, having a form of a moving platform with 6 degrees of freedom with an adjustable point of the steering axle, which also includes a lower platform with specific dimensions and parameters. Vehicle simulators, in particular designs of simulators consisting of individual mechanisms and the methods of connecting individual mechanisms and sub-assemblies constitute an area of technology.

Solutions for simulators of various vehicles are known from the state of the art, including for example a description of patent claim P.429830 shows a driving simulator for heavy type vehicles, consisting of at least a movement system, a driver's cab, a screen displaying the view from the driver's perspective, a simulator of a steering wheel, pedals, gear change lever, a dashboard simulator, a rear view mirror simulator, a driver's seat and a simulator control system. This solution distinguishes itself by the ability to transform it into a driving simulator of at least bus or trolleybus or cargo truck type vehicles. The driver's cab has the dimensions of an actual cabin of a bus or trolleybus or cargo truck and is attached permanently to the support platform of the movement system and can be transformed into a left hand drive or right hand drive version. The screen displaying the view from the driver's perspective is a concave projection screen which provides the driver sitting in the cab at least a 180 degrees field of view, the screen is permanently attached to the driver's cab and positioned in such a way that it provides the driver with a view on the simulated road over which they drive. The mechanism of the steering wheel simulation system and the driver's seat are attached using quick release couplings, enabling an easy transformation to install them in the driver's cab for left hand drive and right hand drive and to simulate the placement of the steering wheel for various types of vehicles. The driver's seat is an acceleration simulating seat, which enables a realistic simulation of feeling the acceleration forces which occur when driving an actual vehicle.

A description of patent claim P.405446 shows a bus driving simulator, consisting of a cabin, containing a dashboard, a steering wheel, a driver's seat and the remaining elements of internal equipment, placed on a base which moves in six planes, moreover an instructor's station and a server station, whereas outside of the cabin on racks visualisation sets are installed, and inside the cabin a sound reproduction device and a panel for installation of equipment are placed, with an entrance into the simulator is located in the rear part of the cabin, whereas the cabin, the instructor's station, the moving base and the servers are interconnected using devices for controlling, recording and transmitting of data. The visualisation set advantageously constitutes a rear projection system which covers the entire field of view of the drivers. The racks are removable or folding. The steering system constitutes a steering system simulator. The gearbox constitutes a gearbox simulator. The cabin has a smell generation device. Dedicated software is used to control the cabin, the moving base and the visualisation set, and a server and dedicated software is used to record, collect and process the data in real time, while dedicated software at the instructor's station is used to conduct the training and to reproduce data from the training process in real time.

In turn, a description of an utility model Ru.067759 demonstrates a simulator for learning to operate and drive a vehicle, consisting of a cabin, placed on a base moving in six planes, characterised in that the cabin in the front, upper and side parts and inside reflects the form of the vehicle and driver's compartment, whereas to the front part of the cabin using a rack a visualisation set is attached, and the driver's compartment contains a dashboard, a steering wheel, a driver's seat, a navigation system, a contamination signalling device, a sound reproduction device, a vehicle control devices, on the side of the cabin side doors are placed, in the rear part of the cabin a roller blind, and in the upper part of the cab a hatch and a periscope are located.

The solutions for simulator design and their mechanisms known from the state of the art prevent the construction of simulators with six degrees of freedom with an adjustable point of the steering axle, with relatively small dimensions, easy to transport and relatively lightweight.

The solution according to the invention created eliminates the drawbacks and disadvantages resulting from the use of solutions from the state of the art.

The essence of the invention, which is a design of a simulator for motorsport training, consists of an upper platform of the simulator being attached in a sliding manner to a lower platform, with the upper platform consisting of a frame, to which a driven truck system and a trailing truck system are attached in series to the frame in the lengthwise axis of the upper platform, where the system of the driven truck of the upper platform consists of a driven truck attached to the frame with fastenings in such a way that the fastenings are connected to each other with guides and the driven truck is attached to the guides using linear bearings, and to one of the fastenings a drive is attached, which advantageously constitutes a servomotor, and the driven truck is connected to the drive using a ball screw and a claw coupling, whereas the trailing truck system of the upper platform consists of a trailing truck attached with linear bearings to guides which connect the end fastenings, using which the system of the trailing truck is attached to the frame of the upper platform, and the lower platform constitutes a frame to which two systems of driven trucks are attached in parallel to each other on axes perpendicular to the longitudinal axis of the lower platform, with the first driven truck of the lower platform being attached to the drive, advantageously a servomotor, through a ball screw and a claw coupling, where the drive is bolted to one of the fastenings, and the fastenings are connected to each other with at least two guides, to which the first driven truck is attached using linear bearings, and the second driven truck of the lower platform is attached in a sliding manner with linear bearings to the guides which connect fastenings, where to one of the fastenings a drive is bolted, advantageously a servomotor, connected to the second driven truck using a ball screw and a claw coupling of the second driven truck of the lower platform, with the driven truck of the upper platform being connected in a vertical axis with the first driven truck of the lower platform using the first coupler and the trailing truck of the upper platform is connected using the second coupler to the second driven truck of the lower platform.

It is advantageous when the couplers of respectively the driven truck of the upper platform to the first driven truck of the lower platform as well as the coupler of the trailing truck of the upper platform to the second driven truck of the lower platform constitute a plate, advantageously a steel one, containing a bearing in a housing and a linear roller.

It is additionally advantageous when between the upper platform and the lower platform rotating elements are installed, on which the upper platform moves over the lower platform.

It is also advantageous when the rig consists of profiled elements, advantageously bent tubes connected to open profiles, whereas it is particularly advantageous when the rig is attached to the upper platform through a system of four actuators, where each of the actuators constitutes an actuator integrated with a drive, advantageously a servomotor, placed in the outer corners of the upper platform and permanently mounted in fastenings of the upper platform frame.

Moreover, it is advantageous when to the frame of the upper platform covers are attached, and it is also advantageous when to the frame of the lower platform covers are attached.

It is also advantageous when legs for adjusting the lower platform's level are attached to the lower platform frame.

It is particularly advantageous when the lower platform length L does not exceed 2000 mm, advantageously is in the range of 1700 mm to 1900 mm, most advantageously the lower platform length amounts to 1800 mm.

It is additionally advantageous then when lower platform width S does not exceed 1600 mm, advantageously is in the range of 1300 mm to 1500 mm, most advantageously the lower platform width amounts to 1400 mm.

It is moreover advantageous when the lower platform height H does not exceed 200 mm, advantageously is in the range of 170 mm to 190 mm, most advantageously the lower platform height amounts to 180 mm.

The use of the solution according to the invention enables the following technical and utility effects:
- simplification of the simulator's design, which improves the durability and reliability of individual mechanisms and sub-systems which were used in it,
- reducing the simulator's weight, which facilitates transport and reduces its cost,
- reducing the simulator's dimensions, which enables placing the simulator in rooms with narrow doors, and placing a larger number of simulators in rooms with a limited area, as well as reducing the cost of transport,
- lowering the simulator's height, which eliminates the need to use a ladder, which also facilitates the use of the simulator by persons with disabilities and with reduced mobility,
- the ability of independent skidding of both front and rear axis through the use of an adjustable point of the steering axle.

The subject of the invention, in an example, but not limiting, implementation was presented on the drawings, where individual figures present, respectively:

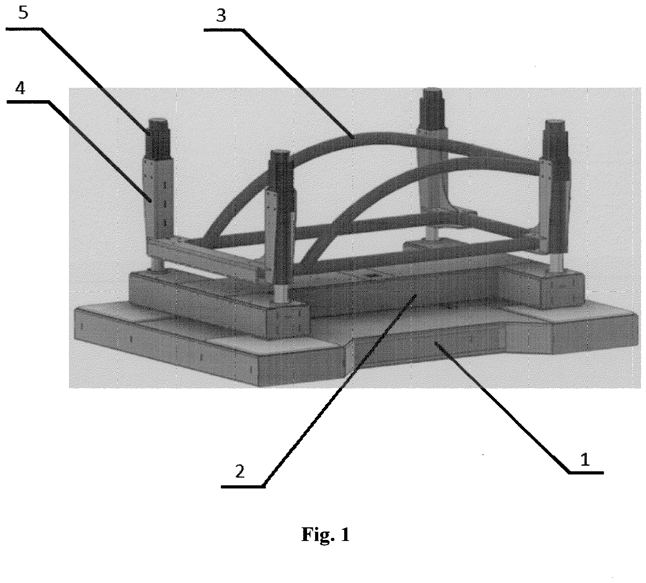

- Fig. 1 - Design of a simulator for motorsport training

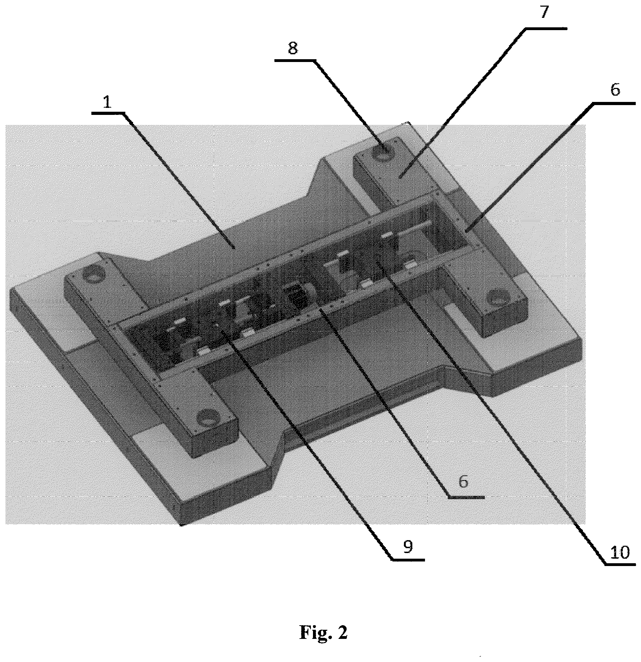

- Fig. 2 - Perspective view of the upper platform mechanisms

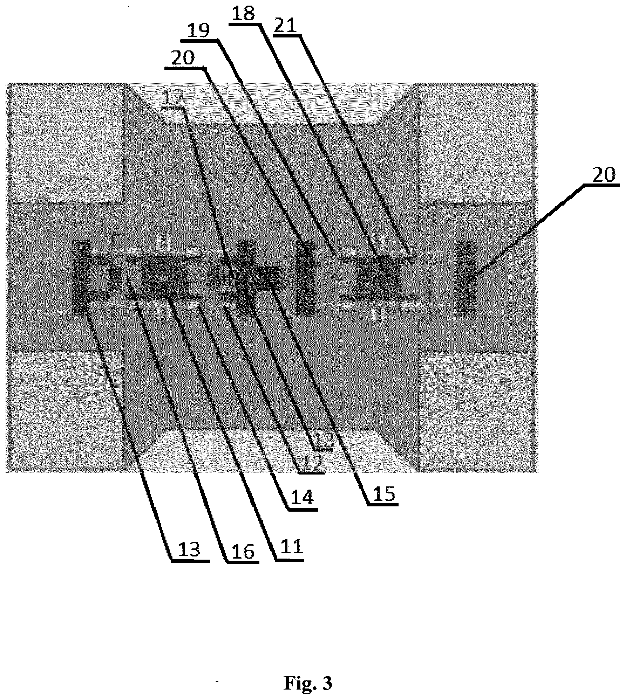

- Fig. 3 - Mechanisms of the upper platform in a top view

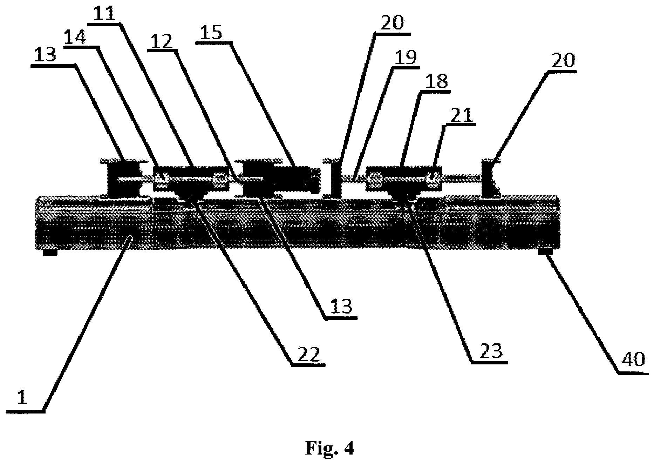

- Fig. 4 - Mechanisms of the upper platform in a front view

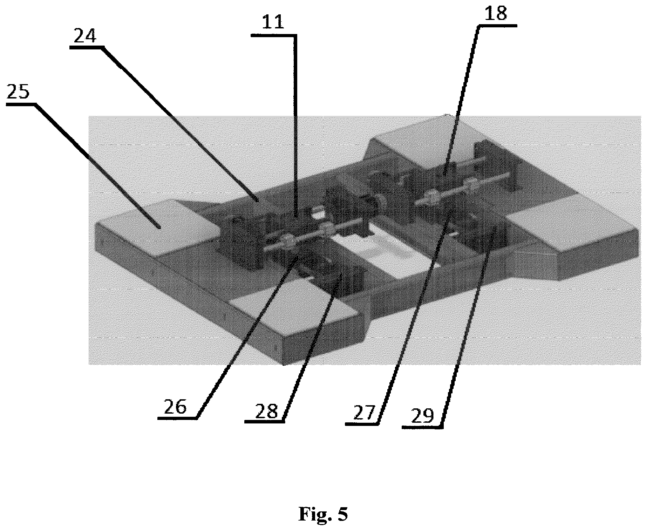

- Fig. 5 - Perspective view of the upper platform mechanisms with partially uncovered mechanisms of the lower platform

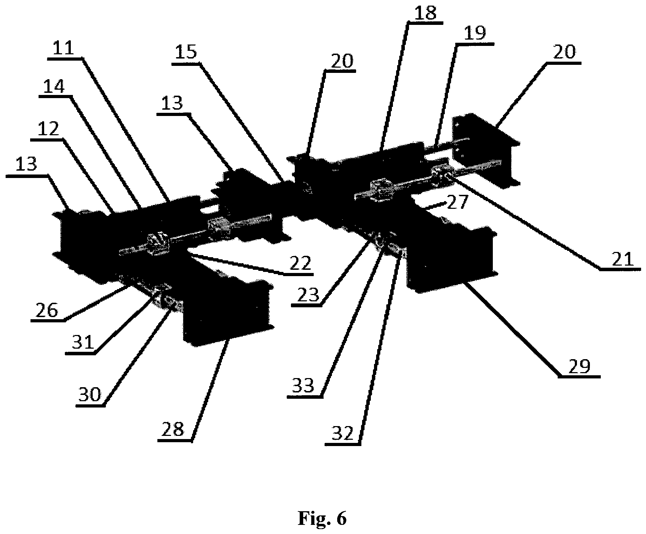

- Fig. 6 - Perspective view of the upper platform and lower platform mechanisms

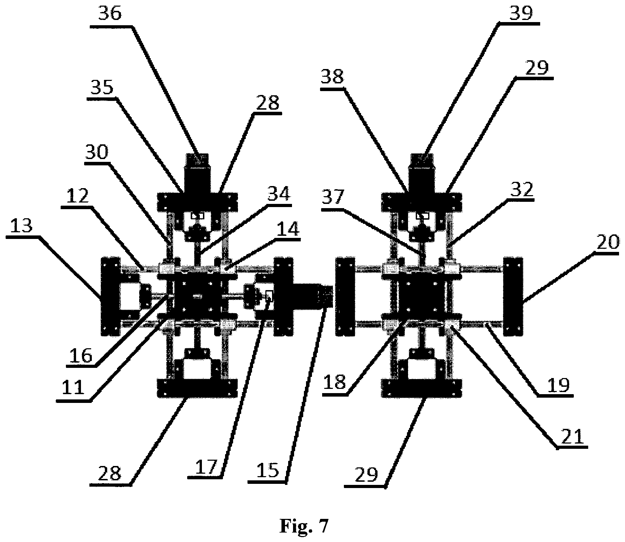

- Fig. 7 - Mechanisms of the upper platform and lower platform in a top view

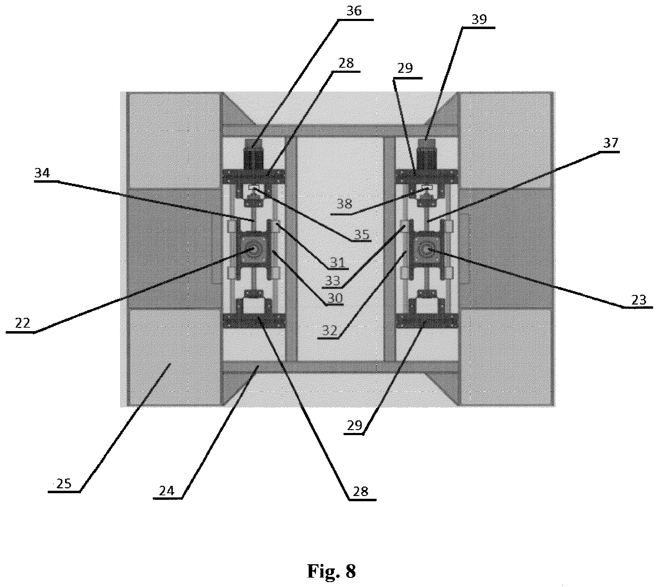

- Fig. 8 - Mechanisms of the lower platform in a top view

A design of a simulator for motorsport training in an example implementation consists of:
- lower platform 1
- upper platform 2
- simulator body frame, so-called "rig" 3.

The length L of the lower platform 1 equals 1800 mm, its width S equals 1400 mm, and the height H of the lower platform 1 equals 180 mm.

Each of the platforms consists of independent frames, to which covers are attached, whereas to frame 6 of the upper platform 2 covers 7 are attached, whereas to frame 24 of the lower platform 1 covers 25 are attached - moreover feet 40 for adjusting the lower platform's level are attached to the bottom of the frame 24 of the lower platform 1.

The upper platform 2 of the simulator is attached in a sliding manner to a lower platform 1, whereas between the covers 7 of the upper platform 2 and the covers 25 of the lower platform 1 rotating elements are attached, on which the upper platform 2 moves over the lower platform 1.

The rig 3 consists of profiled elements, advantageously bent tubes connected to open profiles 4, whereas in the example implementation the rig 3 is attached to the upper platform 2 through a system of four actuators 5, where each of the actuators 5 constitutes an actuator integrated with a drive in the form of a servomotor, Each of the actuators 5 is placed in the outer corners of the upper platform 2 and is permanently mounted in a corresponding fastening 8 of the upper platform 2 frame 6.

To the frame 6 of the upper platform 2 a driven truck 11 system 9 and a trailing truck 18 system 10 are attached in series to the frame 6 in the lengthwise axis of the upper platform 2,

The system 9 of the driven truck 11 of the upper platform 2 consists of a driven truck 11 attached to the frame 6 with fastenings 13 in such a way that the fastenings 13 are connected to each other with guides 12 and the driven truck 11 is attached to the guides 12 using linear bearings 14, and to one of the fastenings 13 a drive 15 is attached, which constitutes a servomotor. The driven truck 11 is connected to the servomotor 15 using a ball screw 16 and a claw coupling 17.

The trailing truck 18 system 10 of the upper platform 2 consists of a trailing truck 18 attached with linear bearings 21 to guides 19 which connect the end fastenings 20, using which the system 10 of the trailing truck is attached to the frame 6.

The lower platform 1 constitutes a frame 24 to which two systems of driven trucks 26 and 27 are attached in parallel to each other on axes perpendicular to the longitudinal axis of the lower platform. The first driven truck 26 of the lower platform 1 is attached to the drive 36, advantageously a servomotor, through a ball screw 34 and a claw coupling 35, where the drive 36 is bolted to one of the fastenings 28, The fastenings 28 are connected to each other with at least two guides 30, to which the first driven truck 26 is attached using linear bearings 31. The second driven truck 27 of the lower platform 1 is attached in a sliding manner with linear bearings 33 to the guides 32 which connect fastenings 29, where to one of the fastenings 29 a drive 39 is bolted, which is also a servomotor, connected to the second driven truck 27 using a ball screw 37 and a claw coupling 38 of the second driven truck 27 of the lower platform 1. The driven truck 11 of the upper platform 2 is connected in a vertical axis with the first driven truck 26 of the lower platform 1 using the first coupler 22 and the trailing truck 18 of the upper platform 2 is connected using the second coupler 23 to the second driven truck 27 of the lower platform 1.

Each of the couplers 22 and 23 constitutes a steel plate, containing a bearing in a housing and a linear roller.

### List of designations

1. Lower platform
2. Upper platform
3. Simulator body frame - rig
4. Open profile
5. Actuator
6. Upper platform frame
7. Upper platform cover
8. Actuator fastening
9. Driven truck system of the upper platform
10.Trailing truck system of the upper platform
11.Driven truck of the upper platform
12.Guide of the driven truck of the upper platform
13.Fastening of the driven truck of the upper platform
14.Linear bearing of the driven truck of the upper platform
15.Drive of the driven truck of the upper platform
16.Ball screw of the driven truck of the upper platform
17.Claw coupling of the driven truck of the upper platform
18.Trailing truck of the upper platform
19. Guide of the trailing truck of the upper platform
20.Fastening of the trailing truck of the upper platform
21.Linear bearing of the trailing truck of the upper platform
22.Coupler of the driven truck of the upper platform with the first driven truck of the lower platform
23.Coupler of the trailing truck of the upper platform with the second driven truck of the lower platform
24.Lower platform frame
25.Lower platform covers
26.First driven truck of the lower platform
27. Second driven truck of the lower platform
28.Fastening of the first driven truck of the lower platform
29.Fastening of the second driven truck of the lower platform
30. Guide of the first driven truck of the lower platform
31.Linear bearing of the first driven truck of the lower platform
32.Guide of the second driven truck of the lower platform
33.Linear bearing of the second driven truck of the lower platform
34.Ball screw of the first driven truck of the lower platform
35.Claw coupling of the first driven truck of the lower platform
36.Drive of the first driven truck of the lower platform
37.Ball screw of the second driven truck of the lower platform
38.Claw coupling of the second driven truck of the lower platform
39.Drive of the second driven truck of the lower platform
40.Legs for adjusting the lower platform level

## Claims

1. A design of a simulator for motorsport training, containing a rig attached in a sliding manner to an upper platform, which is attached in a sliding manner to a lower platform, where the upper platform and the lower platform consist respectively of a frame and covers and are equipped with driving system, **characterised in that** an upper platform (2) of the simulator is attached in a sliding manner to a lower platform (1), with the upper platform (2) consisting of a frame (6), to which a driven truck (11) system (9) and a trailing truck (18) system (10) are attached in series to the frame (6) in the lengthwise axis of the upper platform (2), where the system (9) of the driven truck (11) of the upper platform (2) consists of a driven truck (11) attached to the frame (6) with fastenings (13) in such a way that the fastenings (13) are connected to each other with guides (12) and the driven truck (11) is attached to the guides (12) using linear bearings (14), and to one of the fastenings (13) a drive (15) is attached, which advantageously constitutes a servomotor, and the driven truck (11) is connected to the drive (15) using a ball screw (16) and a claw coupling (17), whereas the trailing truck (18) system (10) of the upper platform (2) consists of a trailing truck (18) attached with linear bearings (21) to guides (19) which connect the end fastenings (20), using which the system (10) of the trailing truck is attached to the frame (6), and the lower platform (1) constitutes a frame (24) to which two systems of driven trucks (26, 27) are attached in parallel to each other on axes perpendicular to the longitudinal axis of the lower platform (2), with the first driven truck (26) of the lower platform (1) being attached to the drive (36), advantageously a servomotor, through a ball screw (34) and a claw coupling (35), where the drive (36) is bolted to one of the fastenings (28), and the fastenings (28) are connected to each other with at least two guides (30), to which the first driven truck (26) is attached using linear bearings (31), and the second driven truck (27) of the lower platform (1) is attached in a sliding manner with linear bearings (33) to the guides (32) which connect fastenings (29), where to one of the fastenings (29) a drive (39) is bolted, advantageously a servomotor, connected to the second driven truck (27) using a ball screw (37) and a claw coupling (38) of the second driven truck (27) of the lower platform (1), with the driven truck (11) of the upper platform (2) being connected in a vertical axis with the first driven truck (26) of the lower platform (1) using the coupler (22) and the trailing truck (18) of the upper platform (2) is connected using the coupler (23) to the second driven truck (27) of the lower platform (1).

2. A design in accordance with claim 1 **characterized in that** the coupler (22, 23) constitutes a plate, advantageously steel plate, containing a bearing in a housing and a linear roller.

3. A design in accordance with claim 1 or claim 2 **characterized in that** between the upper platform (2) and the lower platform (1) rotating elements are installed, on which the upper platform (2) moves over the lower platform (1).

4. A design in accordance with claim 1, **characterized in that** the simulator body frame, so-called "rig" (3) consists of profiled elements, advantageously bent tubes connected to open profiles (4).

5. A design in accordance with claim 1 or claim 4 **characterized in that** the rig (3) is attached to the upper platform (2) through a system of four actuators(5), where each of the actuators (5) constitutes an actuator integrated with a drive, advantageously a servomotor, placed in the outer corners of the upper platform (2) and permanently mounted in fastenings (8) of the upper platform (2) frame (6).

6. A design in accordance with claim 1, **characterized in that** to the frame (6) of the upper platform (2) covers (7) are attached.

7. A design in accordance with claim 1, **characterized in that** to the frame (24) of the lower platform (1) covers (25) are attached.

8. A design in accordance with claim 1, **characterized in that** legs (40) for adjusting the lower platform (1) level are attached to the frame (24) of the lower platform (1).

9. A system in accordance with any of the claims, from claim 1 to claim 8 **characterized in that** the lower platform (1) length L does not exceed 2000 mm, advantageously is in the range of 1700 mm to 1900 mm, most advantageously the lower platform (1) length amounts to 1800 mm.

10. A system in accordance with any of the claims, from claim 1 to claim 8 **characterized in that** the lower platform (1) width S does not exceed 1600 mm, advantageously is in the range of 1300 mm to 1500 mm, most advantageously the lower platform (1) width amounts to 1400 mm.

11. A system in accordance with any of the claims, from claim 1 to claim 8 **characterized in that** the lower platform (1) height H does not exceed 200 mm, advantageously is in the range of 170 mm to 190 mm, most advantageously the lower platform (1) height amounts to 180 mm.
